# EUROPEAN PATENT APPLICATION

(11) **EP 3 043 419 A1**
(43) Date of publication of application: **13.07.2016**
(21) Application number: 16150115.0
(22) Date of filing: 05.01.2016
(51) Int. Cl.: H01Q 1/24, H01Q 13/10, H01Q 13/16, H01Q 5/357

(54) **METAL-FRAME SLOT ANTENNA WITH MATCHING CIRCUIT AND APPARATUS THEREOF**

(30) Priority: 06.01.2015 US 201562100156 P; 27.12.2015 US 201514979398
(71) Applicant: MediaTek Inc., Hsin-Chu 300 (TW)
(72) Inventor: HUNG, Kuo-Fong, 500 Changhua City (TW); CHI, Chia-Wei, 105 Taipei City (TW); YEH, Shih-Huang, 300 Hsinchu City (TW)
(74) Representative: Goddar, Heinz J.

(57) **Abstract**

Examples of a metal-frame slot antenna with one or more matching circuits and apparatus thereof are described. A slot antenna may include a metallic frame, which may include a primary sheet with plural peripheral sides surrounding the primary sheet. The metallic frame may also include at least one slot. Each slot of the at least one slot may extend along one or more peripheral sides of the plural peripheral sides of the metallic frame such that the plural peripheral sides of the metallic frame are continuous without an opening. The at least one slot may include a first slot which may be generally U-shaped or contiguous along at least three peripheral sides of the plural peripheral sides.

## Description

### CROSS REFERENCE TO RELATED PATENT APPLICATION

The present disclosure claims the priority benefit of U.S. Provisional Patent Application No. 62/100,156, filed on 06 January 2015, which is incorporated by reference in its entirety.

### TECHNICAL FIELD

The present disclosure is generally related to antennas and, more particularly, to a metal-frame slot antenna with one or more matching circuits and apparatus thereof.

### BACKGROUND

Unless otherwise indicated herein, approaches described in this section are not prior art to the claims listed below and are not admitted to be prior art by inclusion in this section.

Portable electronic apparatuses with wireless communication capabilities, such as smartphones and tablet computers, are becoming more popular nowadays. Other than improving the performance of various functionalities, vendors also introduce new look and feel with respect to the appearance of the portable electronic apparatuses. A current trend is the use of a metal cove or metal frame as the housing of the portable electronic apparatus.

### SUMMARY

The following summary is illustrative only and is not intended to be limiting in any way. That is, the following summary is provided to introduce concepts, highlights, benefits and advantages of the novel and non-obvious techniques described herein. Select, not all, implementations are further described below in the detailed description. Thus, the following summary is not intended to identify essential features of the claimed subject matter, nor is it intended for use in determining the scope of the claimed subject matter.

An objective of the present disclosure is to provide a metallic frame without any gap to serve as a slot antenna in portable electronic apparatuses with wireless communication capabilities. Advantageously, implementations in accordance with the present disclosure provide a metal-frame slot antenna that is cost effective. Also advantageously, frequencies of wireless signals emitted by the metal-frame slot antenna may be tuned easily by one or more matching circuits. Moreover, the low, mid and high bands of frequencies may be tuned separately.

In one example implementation, a slot antenna may include a metallic frame. The metallic frame may include a primary side with plural peripheral sides surrounding the primary side. The metallic frame may also include at least one slot on the primary sheet. Each slot of the at least one slot may extend along one or more peripheral sides of the plural peripheral sides of the metallic frame such that the plural peripheral sides of the metallic frame are continuous without an opening. The at least one slot may include a first slot which may be generally U-shaped or contiguous along at least three peripheral sides of the plural peripheral sides.

In another example implementation, a slot antenna may include a metallic frame and one or more matching circuits. The metallic frame may include a primary side with plural peripheral sides surrounding the primary side. The metallic frame may also include at least one slot on the primary sheet. Each slot of the at least one slot may extend along one or more peripheral sides of the plural peripheral sides of the metallic frame such that the plural peripheral sides are continuous without an opening. Each of the one or more matching circuits may be electrically connected across a respective slot of the at least one slot and configured to tune at least one respective frequency range of one or more frequency ranges of the slot antenna.

In yet another example implementation, an apparatus may include a slot antenna, a wireless communication circuit and a printed circuit board (PCB). The slot antenna may include a metallic frame. The metallic frame may include a primary side with plural peripheral sides surrounding the primary side. The metallic frame may also include at least one slot on the primary sheet. Each slot of the at least one slot may extend along one or more peripheral sides of the plural peripheral sides of the metallic frame such that the plural peripheral sides of the metallic frame are continuous without an opening. The at least one slot may include a first slot which may be generally U-shaped or contiguous along at least three peripheral sides of the plurality of peripheral sides. The wireless communication circuit may be configured to transmit, receive, or both transmit and receive wireless signals through the slot antenna. The PCB may be disposed on the metallic frame of the slot antenna and configured to carry the wireless communication circuit.

In still another example implementation, an apparatus may include a slot antenna, one or more matching circuits, a wireless communication circuit and a PCB. The slot antenna may include a metallic frame. The metallic frame may include a primary sheet with plural peripheral sides surrounding the primary sheet. The metallic frame may also include at least one slot on the primary sheet. Each slot of the at least one slot may extend along one or more peripheral sides of the plural peripheral sides of the metallic frame such that the plural peripheral sides are continuous without an opening. Each of the one or more matching circuits may be electrically connected across a respective slot of the at least one slot and configured to tune at least one respective frequency range of one or more frequency ranges of the slot antenna. The wireless communication circuit may be configured to transmit, receive, or both transmit and receive wireless signals through the slot antenna. The PCB may be disposed on the metallic frame of the slot antenna and configured to carry the wireless communication circuit.

### BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example slot antenna in accordance with an implementation of the present disclosure.
FIG. 2 is a diagram of an example slot antenna in accordance with another implementation of the present disclosure.
FIG. 3 is a diagram of an example slot antenna in accordance with yet another implementation of the present disclosure.
FIG. 4 is a diagram of an example apparatus employing an example slot antenna in accordance with an implementation of the present disclosure.

### DETAILED DESCRIPTION OF PREFERRED EMBODIMENTS

### Overview

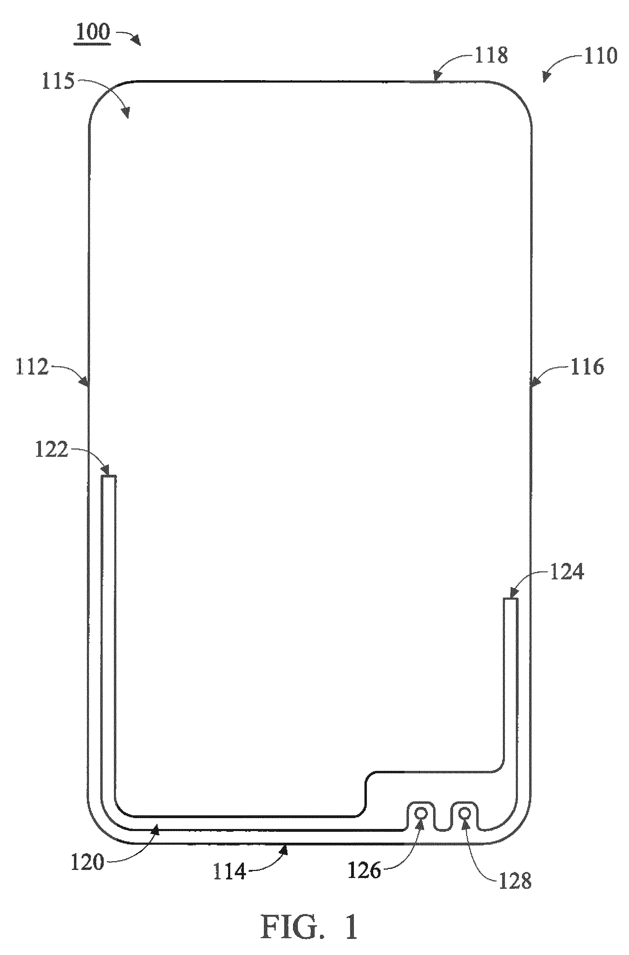

FIG. 1 illustrates an example slot antenna 100 in accordance with an implementation of the present disclosure. Referring to FIG. 1, slot antenna 100 may include a metallic frame 110. Metallic frame 110 may be made of a metallic material which may be, for example and not limited to, aluminum, copper, metal alloy or another suitable metallic material. Metallic frame 110 may include a primary sheet 115 with plural peripheral sides including a first peripheral side 112, a second peripheral side 114, a third peripheral side 116 and a fourth peripheral side 118, and the plural peripheral sides 112, 114, 116 and 118 may surround the primary sheet 115. Metallic frame 110 may also include at least one slot on the primary sheet 115. Each slot of the at least one slot may extend along and in parallel with one or more peripheral sides of the plural peripheral sides 112, 114, 116 and 118 of metallic frame 110. Each peripheral side may be perpendicular to the primary sheet 115 in a side view of Metallic frame 110. Each peripheral side may be joined with the primary sheet 115 without any opening or gap between them. Advantageously, this novel design allows the plural peripheral sides 112, 114, 116 and 118 of metallic frame 110 to be continuous without any opening or gap.

In the example shown in FIG. 1, the at least one slot of metallic frame 110 may include a first slot 120. First slot 120 may be generally U-shaped. For instance, in the example shown in FIG. 1, first slot 120 may extend from a first distal end 122 along first peripheral side 112, second peripheral side 114 and third peripheral side 116 to a second distal end 124. That is, first slot 120 may be contiguous, from first distal end 122 to second distal end 124, along at least three peripheral sides of the plural peripheral sides 112, 114, 116 and 118 of metallic frame 110. It is noteworthy that the length of the first slot 120 is not arbitrary and may be proportional to a wavelength corresponding to a frequency of slot antenna 100.

In some embodiments, first slot 120 may be generally U-shaped. In the same or alternative embodiments, first slot 120 may be contiguous along at least three peripheral sides of the plural peripheral sides 112, 114, 116 and 118, meaning that first slot 120 may extend along at least a portion of one peripheral side, contiguously to extend along another peripheral side, and further contiguously to extend along at least a portion of further another peripheral side. That is, first slot 120 may extend along at least three of the plural peripheral sides 112, 114, 116 and 118 completely or partially. In the embodiment shown in FIG. 1, first slot 120 extends along at least a portion of first peripheral side 112, contiguously to extend along second peripheral side 114, and contiguously to extend along at least a portion of third peripheral side 116. In addition, first slot 120 may have a fixed or varied width. Furthermore, first slot 120 may have a fixed or varied distance from those peripheral sides along which first slot 120 extends.

Referring to FIG. 1, slot antenna 100 may also include one or more feeding ports and one or more shorting ports. In one embodiment, slot antenna 100 may include a feeding port 126 and a shorting port 128 on metallic frame 110. Feeding port 126 and shorting port 128 may be disposed along second peripheral side 114 of metallic frame 110. A first length from first distal end 122 of first slot 120 to feeding port 126 may be approximately one half of a first wavelength corresponding to a first frequency in at least one first range of frequencies of slot antenna 100. Similarly, a second length from second distal end 124 of first slot 120 to feeding port 126 may be approximately one half of a second wavelength corresponding to a second frequency in at least one second range of frequencies of slot antenna 100. The at least one first range of frequencies and the at least one second range of frequencies of slot antenna 100 may be different from each other.

### Example Implementations

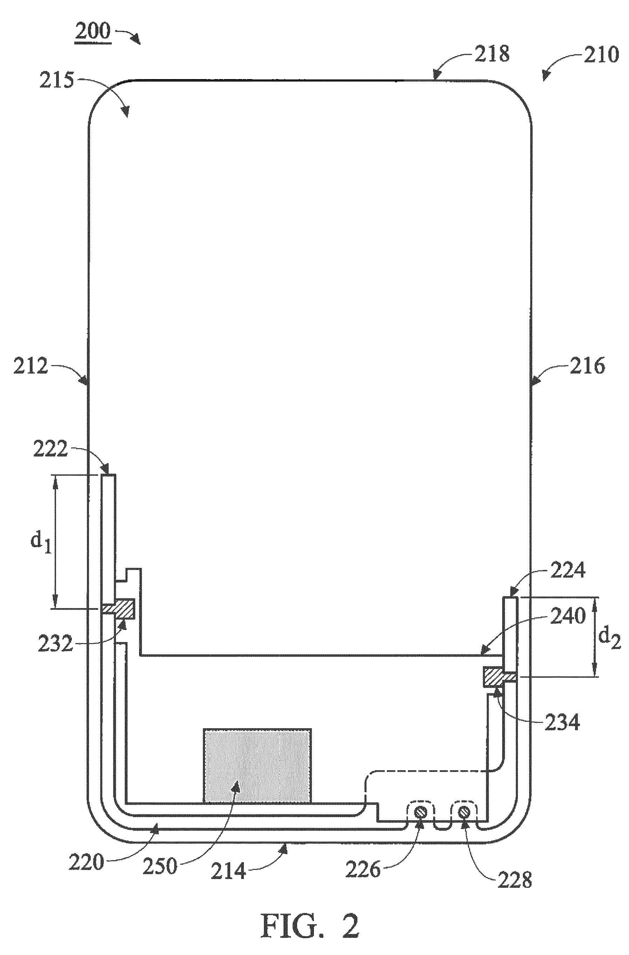

FIG. 2 illustrates an example slot antenna 200 in accordance with another implementation of the present disclosure. Referring to FIG. 2, slot antenna 200 may include a metallic frame 210. Metallic frame 210 may be made of a metallic material which may be, for example and not limited to, aluminum, copper, metal alloy or another suitable metallic material. Metallic frame 210 may include a primary sheet 215 with plural peripheral sides including a first peripheral side 212, a second peripheral side 214, a third peripheral side 216 and a fourth peripheral side 218, and the plural peripheral sides 212, 214, 216 and 218 may surround the primary sheet 215. Metallic frame 210 may also include at least one slot on the primary sheet 215 with each slot of the at least one slot extending along and in parallel with one or more peripheral sides of the plural peripheral sides 212, 214, 216 and 218 of metallic frame 210. Advantageously, this novel design allows the plural peripheral sides 212, 214, 216 and 218 of metallic frame 210 to be continuous without any opening or gap.

In the example shown in FIG. 2, the at least one slot of metallic frame 210 may include a first slot 220. First slot 220 may be generally U-shaped. For instance, in the example shown in FIG. 2, first slot 220 may extend from a first distal end 222 along first peripheral side 212, second peripheral side 214 and third peripheral side 216 to a second distal end 224. That is, first slot 220 may be contiguous, from first distal end 222 to second distal end 224, along at least three peripheral sides of the plural peripheral sides 212, 214, 216 and 218 of metallic frame 210. It is noteworthy that the length of the first slot 220 is not arbitrary and may be proportional to a wavelength corresponding to a frequency of slot antenna 200.

Referring to FIG. 2, slot antenna 200 may also include a feeding port 226 and a shorting port 228 on metallic frame 210. Feeding port 226 and shorting port 228 may be disposed along second peripheral side 214 of metallic frame 210. A first length from first distal end 222 of first slot 220 to feeding port 226 may be approximately one half of a first wavelength corresponding to a first frequency in at least one first range of frequencies of slot antenna 200. Likewise, a second length from second distal end 224 of first slot 220 to feeding port 226 may be approximately one half of a second wavelength corresponding to a second frequency in at least one second range of frequencies of slot antenna 200. The at least one first range of frequencies and the at least one second range of frequencies of slot antenna 200 may be different from each other.

Referring to FIG. 2, slot antenna 200 may further include a PCB 240 and a wireless communication circuit 250. PCB 240 may be disposed on metallic frame 210 and configured to carry wireless communication circuit 250. Wireless communication circuit 250 may be configured to transmit, receive, or both transmit and receive wireless signals through slot antenna 200.

In some implementations, slot antenna 200 may also include one or more matching circuits. Each of the one or more matching circuits may be electrically connected across a respective slot of the at least one slot of metallic frame 210. In one embodiment, each of the one or more matching circuits may be electrically connected between one of the peripheral sides and the PCB 240. Each of the one or more matching circuits may be configured to tune at least one respective frequency range of one or more frequency ranges of slot antenna 200. Moreover, each of the one or more matching circuits may be disposed at a respective distance from a respective distal end of the respective slot. For instance, the respective distance of each of the one or more matching circuits may be determined according to a wavelength corresponding to a frequency in the respective frequency of the one or more frequency ranges of slot antenna 200 tuned by the one or more matching circuits. For example, the respective distance of each of the one or more matching circuits may be no greater than or equal to a fraction of a wavelength corresponding to a frequency in the respective frequency of the one or more frequency ranges of slot antenna 200 tuned by the one or more matching circuits. On the other hand, it is noted in the embodiment, wireless communication circuit 250 may be disposed on PCB 240 where the one or more matching circuits are disposed or connected to. However, in an alternative embodiment, wireless communication circuit 250 may be disposed on another PCB different from PCB 240 where the one or more matching circuits are disposed or connected to.

In the example shown in FIG. 2, slot antenna 200 may include a first matching circuit 232 electrically connected across first slot 220. First matching circuit 232 may be configured to tune the at least one first range of frequencies of slot antenna 200. First matching circuit 232 may be disposed at a first distance d₁ from first distal end 222 of first slot 220 along first peripheral side 212 of metallic frame 210. In some implementations, first distance d₁ may be no greater than a first fraction of a first wavelength corresponding to a first frequency in the at least one first range of frequencies of slot antenna 200.

In the example shown in FIG. 2, slot antenna 200 may also include a second matching circuit 234 electrically connected across first slot 220. Second matching circuit 234 may be configured to tune the at least one second range of frequencies of slot antenna 200. Second matching circuit 234 may be disposed at a second distance d₂ from second distal end 224 of first slot 220 along third peripheral side 216 of metallic frame 210. In some implementations, second distance d₂ may be no greater than a second fraction of a second wavelength corresponding to a second frequency in the at least one second range of frequencies of slot antenna 200. In some implementations, first distance d₁ and second distance d₂ may be different from each other.

Slot antenna 200 as shown in FIG. 2 may be viewed from a back side of a portable electronic apparatus in which slot antenna 200 is installed.

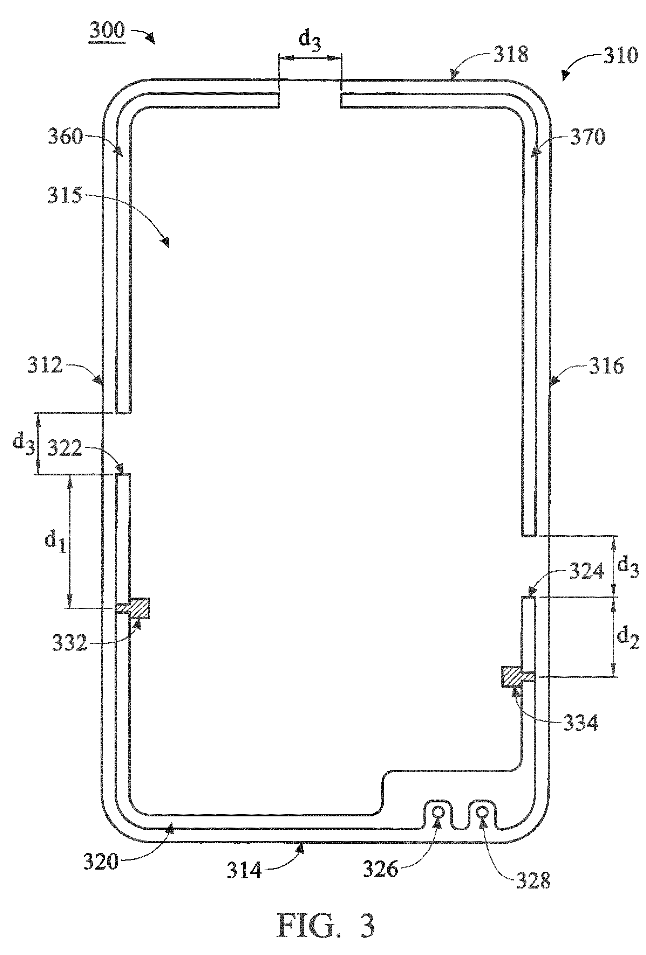

FIG. 3 illustrates an example slot antenna 300 in accordance with yet another implementation of the present disclosure. Referring to FIG. 3, slot antenna 300 may include a metallic frame 310. Metallic frame 310 may be made of a metallic material which may be, for example and not limited to, aluminum, copper, metal alloy or another suitable metallic material. Metallic frame 310 may include a primary sheet 315 with plural peripheral sides including a first peripheral side 312, a second peripheral side 314, a third peripheral side 316 and a fourth peripheral side 318, and the plural peripheral sides 312, 314, 316 and 318 may surround the primary sheet 315. Metallic frame 310 may also include at least one slot on the primary sheet 315 with each slot of the at least one slot extending along and in parallel with one or more peripheral sides of the plural peripheral sides 312, 314, 316 and 318 of metallic frame 310. Advantageously, this novel design allows the plural peripheral sides 312, 314, 316 and 318 of metallic frame 310 to be continuous without any opening or gap.

In the example shown in FIG. 3, the at least one slot of metallic frame 310 may include a first slot 320. First slot 320 may be generally U-shaped. For instance, in the example shown in FIG. 3, first slot 320 may extend from a first distal end 322 along first peripheral side 312, second peripheral side 314 and third peripheral side 316 to a second distal end 324. That is, first slot 320 may be contiguous, from first distal end 322 to second distal end 324, along at least three peripheral sides of the plural peripheral sides 312, 314, 316 and 318 of metallic frame 310. It is noteworthy that the length of the first slot 320 is not arbitrary and may be proportional to a wavelength corresponding to a frequency of slot antenna 300.

Referring to FIG. 3, slot antenna 300 may also include a feeding port 326 and a shorting port 328 on metallic frame 310. Feeding port 326 and shorting port 328 may be disposed along second peripheral side 314 of metallic frame 310. A first length from first distal end 322 of first slot 320 to feeding port 326 may be approximately one half of a first wavelength corresponding to a first frequency in at least one first range of frequencies of slot antenna 300. Similarly, a second length from second distal end 324 of first slot 320 to feeding port 326 may be approximately one half of a second wavelength corresponding to a second frequency in at least one second range of frequencies of slot antenna 300. The at least one first range of frequencies and the at least one second range of frequencies of slot antenna 300 may be different from each other.

In some implementations, slot antenna 300 may also include one or more matching circuits. Each of the one or more matching circuits may be electrically connected across a respective slot of the at least one slot of metallic frame 310. Each of the one or more matching circuits may be configured to tune at least one respective frequency range of one or more frequency ranges of slot antenna 300. Moreover, each of the one or more matching circuits may be disposed at a respective distance from a respective distal end of the respective slot. For instance, the respective distance of each of the one or more matching circuits may be determined according to a wavelength corresponding to a frequency in the respective frequency of the one or more frequency ranges of slot antenna 300 tuned by the one or more matching circuits. In some embodiments, the respective distance of each of the one or more matching circuits may be determined to be a fraction of a wavelength corresponding to a frequency in the respective frequency of the one or more frequency ranges of slot antenna 300 tuned by the one or more matching circuits.

In the example shown in FIG. 3, slot antenna 300 may include a first matching circuit 332 electrically connected across first slot 320. First matching circuit 332 may be configured to tune the at least one first range of frequencies of slot antenna 300. First matching circuit 332 may be disposed at a first distance d₁ from first distal end 322 of first slot 320 along first peripheral side 312 of metallic frame 310. In some implementations, first distance d₁ may be no greater than a first fraction of a first wavelength corresponding to a first frequency in the at least one first range of frequencies of slot antenna 300.

In the example shown in FIG. 3, slot antenna 300 may also include a second matching circuit 334 electrically connected across first slot 320. Second matching circuit 334 may be configured to tune the at least one second range of frequencies of slot antenna 300. Second matching circuit 334 may be disposed at a second distance d₂ from second distal end 324 of first slot 320 along third peripheral side 316 of metallic frame 310. In some implementations, second distance d₂ may be no greater than a second fraction of a second wavelength corresponding to a second frequency in the at least one second range of frequencies of slot antenna 300. In some implementations, first distance d₁ and second distance d₂ may be different from each other.

Referring to FIG. 3, metallic frame 310 may further include one or more second slots on the primary sheet 315. Each slot of the one or more second slots may extend along and in parallel with one or more peripheral sides of the plural peripheral sides 312, 314, 316 and 318 of metallic frame 310. Each of the one or more second slots may be separate from first slot 320 or a neighboring slot of the one or more second slots by at least a threshold distance. In the example shown in FIG. 3, metallic frame 310 may also include a second slot 360 and a third slot 370. Second slot 360 may extend along and in parallel with first peripheral side 312 and fourth peripheral side 318. Third slot 370 may extend along and in parallel with third peripheral side 316 and fourth peripheral side 318. Second slot 360 may be separate from first distal end 322 of first 320 by at least a third distance d₃ which may be a threshold distance. Third slot 370 may be separate from second distal end 324 of first 320 by at least third distance d₃. Moreover, second slot 360 and third slot 370 may be separate from each other by at least third distance d₃.

In some embodiments, slot antenna 300 may further include one or more matching circuits, each electrically connected across third slot 360 or fourth slot 370. For example, slot antenna 300 may further include either or both of a third matching circuit electrically connected across third slot 360 and a forth matching circuit electrically connected across fourth slot 370. The respective distance of each of the third and fourth matching circuits may be determined according to a wavelength corresponding to a frequency in the respective frequency of the one or more frequency ranges of slot antenna 300 tuned by the third and fourth matching circuits. For example, the respective distance of each of the third and fourth matching circuits may be determined to be no greater than a fraction of a wavelength corresponding to a frequency in the respective frequency of the one or more frequency ranges of slot antenna 300 tuned by the third and fourth matching circuits.

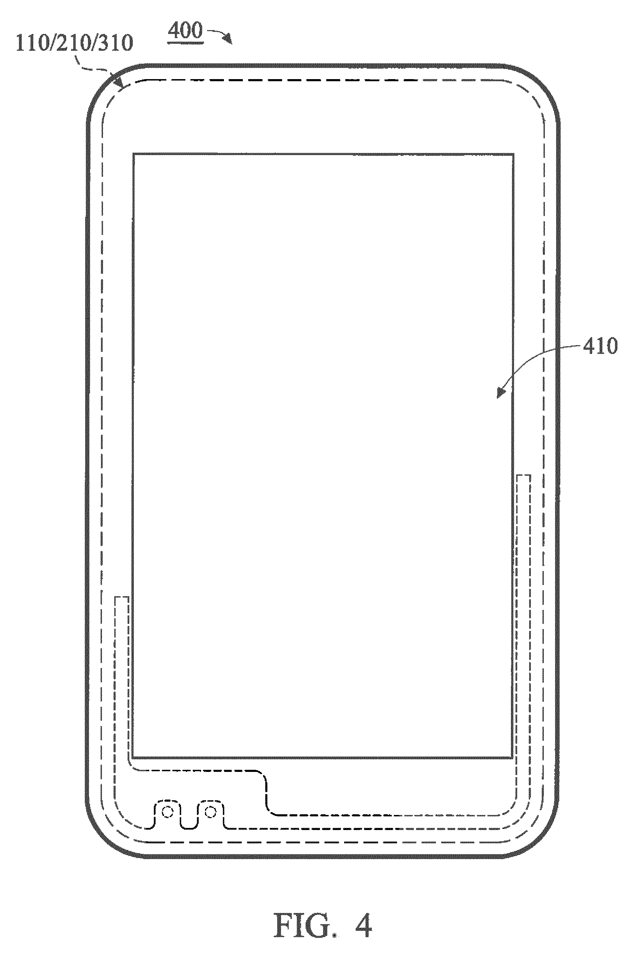

FIG. 4 illustrates an example apparatus 400 employing example slot antenna 100, 200 or 300 in accordance with an implementation of the present disclosure. In the case that slot antenna 200 is employed in apparatus 400, various components of slot antenna 200 are not shown in FIG. 4 in the interest of simplicity.

Apparatus 400 may be a portable electronic apparatus which may be, for example, a smartphone or a handheld communication apparatus. Apparatus 400 as shown in FIG. 4 may be viewed from a front side of apparatus 400, which may include a user interface device 410. User interface device 410 may be, for example, a touch-sensing display panel configured to display textual information, graphics, pictures and videos and to sense touches by a user as various user inputs. Referring to FIGs. 1, 2 and 3 at the same time, part or all of PCB 240, matching circuits 232 and 234, and communication circuit 250 may be disposed between the user interface device 410 and metal frame 110/210/310.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., " a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., " a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

The invention relates to a slot antenna, comprising:
a metallic frame, the metallic frame comprising a primary sheet with a plurality of peripheral sides surrounding the primary sheet, the metallic frame further comprising at least one slot on the primary sheet with each slot of the at least one slot extending along one or more peripheral sides of the plurality of peripheral sides of the metallic frame such that the plurality of peripheral sides of the metallic frame are continuous without an opening, the at least one slot comprising a first slot that is generally U-shaped or is contiguous along at least three peripheral sides of the plurality of peripheral sides.

According to an embodiment of the slot antenna, the first slot extends along a first peripheral side, a second peripheral side, and a third peripheral side of the plurality of peripheral sides of the metallic frame.

According to an embodiment, the slot antenna further comprises a first matching circuit configured to tune at least one first range of frequencies of the slot antenna, the first matching circuit disposed at a first distance from a first distal end of the first slot along the first peripheral side.

According to an embodiment of the slot antenna, the first distance is no greater than a first fraction of a first wavelength corresponding to a first frequency in the at least one first range of frequencies of the slot antenna.

According to an embodiment, the slot antenna further comprises a second matching circuit configured to tune at least one second range of frequencies of the slot antenna different from the at least one first range of frequencies, the second matching circuit disposed at a second distance from a second distal end of the first slot along the third peripheral side.

According to an embodiment of the slot antenna, the second distance is no greater than a second fraction of a second wavelength corresponding to a second frequency in the at least one second range of frequencies of the slot antenna.

According to an embodiment of the slot antenna, the first distance and the second distance are different.

According to an embodiment of the slot antenna, a length of the first slot is proportional to a wavelength corresponding to a frequency of the slot antenna.

According to an embodiment of the slot antenna, the at least one slot further comprises one or more second slots, each of the one or more second slots separate from the first slot or a neighboring slot of the one or more second slots by at least a threshold distance.

According to an embodiment, the slot antenna further comprises a feeding port and a shorting port disposed along the second peripheral side of the metallic frame.

According to an embodiment, the slot antenna further comprises a feeding port disposed along the second peripheral side of the metallic frame, wherein a first length from the first distal end to the feeding port is approximately one half of a first wavelength corresponding to a first frequency in the at least one first range of frequencies of the slot antenna, and wherein a second length from the second distal end to the feeding port is approximately one half of a second wavelength corresponding to a second frequency in the at least one second range of frequencies of the slot antenna.

The invention further relates to a slot antenna comprising a metallic frame, the metallic frame comprising a primary sheet with a plurality of peripheral sides surrounding the primary sheet, the metallic frame further comprising at least one slot on the primary sheet with each slot of the at least one slot extending along one or more peripheral sides of the plurality of peripheral sides of the metallic frame such that the plurality of peripheral sides are continuous without an opening; one or more matching circuits each electrically connected across a respective slot of the at least one slot and configured to tune at least one respective frequency range of one or more frequency ranges of the slot antenna.

According to an embodiment of the slot antenna, each of the one or more matching circuits is disposed at a respective distance from a respective distal end of the respective slot.

According to an embodiment of the slot antenna, the respective distance of each of the one or more matching circuits is determined according to a wavelength corresponding to a frequency in the respective frequency of the one or more frequency ranges of the slot antenna tuned by the one or more matching circuits.

According to an embodiment of the slot antenna, the at least one slot comprises a first slot extending contiguously along at least three peripheral sides of the plurality of peripheral sides.

According to an embodiment of the slot antenna, the first slot is generally U-shaped.

According to an embodiment of the slot antenna, each of the one or more matching circuits is electrically connected across the first slot and disposed at a respective distance from one of two distal ends of the first slot.

According to an embodiment of the slot antenna, the at least one slot further comprises one or more second slots, each of the one or more second slots separate from the first slot or a neighboring slot of the one or more second slots by at least a threshold distance.

The invention further relates to an apparatus comprising a slot antenna comprising a metallic frame, the metallic frame comprising a primary sheet with a plurality of peripheral sides surrounding the primary sheet, the metallic frame further comprising at least one slot on the primary sheet with each slot of the at least one slot extending along one or more peripheral sides of the plurality of peripheral sides of the metallic frame such that the plurality of peripheral sides of the metallic frame are continuous without an opening, the at least one slot comprising a first slot that is generally U-shaped or is contiguous along at least three peripheral sides of the plurality of peripheral sides;
a wireless communication circuit configured to transmit, receive, or both transmit and receive wireless signals through the slot antenna; and a printed circuit board (PCB) disposed on the metallic frame of the slot antenna and configured to carry the wireless communication circuit.

According to an embodiment, the apparatus further comprises a first matching circuit configured to tune at least one first range of frequencies of the slot antenna, the first matching circuit disposed at a first distance from a first distal end of the first slot along a first peripheral side of the plurality of peripheral sides.

According to an embodiment of the apparatus, the first distance is no greater than a first fraction of a first wavelength corresponding to a first frequency in the at least one first range of frequencies of the slot antenna.

According to an embodiment, the apparatus further comprises a second matching circuit configured to tune at least one second range of frequencies of the slot antenna different from the at least one first range of frequencies, the second matching circuit disposed at a second distance from a second distal end of the first slot along a third peripheral side of the plurality of peripheral sides, the first peripheral side and the third peripheral side connected to a second peripheral side of the plurality of peripheral sides which is between the first peripheral side and the third peripheral side.

According to an embodiment of the apparatus, the second distance is no greater than a second fraction of a second wavelength corresponding to a second frequency in the at least one second range of frequencies of the slot antenna.

According to an embodiment of the apparatus, the first distance and the second distance are different.

According to an embodiment of the apparatus, a length of the first slot is proportional to a wavelength corresponding to a frequency of the slot antenna.

According to an embodiment of the apparatus, the at least one slot further comprises one or more second slots, each of the one or more second slots separate from the first slot or a neighboring slot of the one or more second slots by at least a threshold distance.

According to an embodiment, the apparatus further comprises a feeding port and a shorting port disposed along the second peripheral side of the metallic frame, wherein a first length from the first distal end to the feeding port is approximately one half of a first wavelength corresponding to a first frequency in the at least one first range of frequencies of the slot antenna, and wherein a second length from the second distal end to the feeding port is approximately one half of a second wavelength corresponding to a second frequency in the at least one second range of frequencies of the slot antenna.

The invention further relates to an apparatus comprising a slot antenna comprising a metallic frame comprising a primary sheet with a plurality of peripheral sides surrounding the primary sheet; and at least one slot on the primary sheet with each slot of the at least one slot extending along one or more peripheral sides of the plurality of peripheral sides of the metallic frame such that the plurality of peripheral sides are continuous without an opening; and one or more matching circuits each electrically connected across a respective slot of the at least one slot and configured to tune at least one respective frequency range of one or more frequency ranges of the slot antenna; a wireless communication circuit configured to transmit, receive, or both transmit and receive wireless signals through the slot antenna; and a printed circuit board (PCB) disposed on the metallic frame of the slot antenna and configured to carry the wireless communication circuit.

According to an embodiment of the apparatus, each of the one or more matching circuits is disposed at a respective distance from a respective distal end of the respective slot, wherein the respective distance of each of the one or more matching circuits is determined according to a wavelength corresponding to a frequency in the respective frequency of the one or more frequency ranges of the slot antenna tuned by the one or more matching circuits.

According to an embodiment of the apparatus, the at least one slot comprises a first slot extending contiguously along at least three peripheral sides of the plurality of peripheral sides.

According to an embodiment of the apparatus, the first slot is generally U-shaped.

According to an embodiment of the apparatus, each of the one or more matching circuits is electrically connected across the first slot and disposed at a respective distance from one of two distal ends of the first slot.

According to an embodiment of the apparatus, the at least one slot further comprises one or more second slots, each of the one or more second slots separate from the first slot or a neighboring slot of the one or more second slots by at least a threshold distance.

## Claims

1. A slot antenna, comprising:
a metallic frame, the metallic frame comprising a primary sheet with a plurality of peripheral sides surrounding the primary sheet, the metallic frame further comprising at least one slot on the primary sheet with each slot of the at least one slot extending along one or more peripheral sides of the plurality of peripheral sides of the metallic frame such that the plurality of peripheral sides of the metallic frame are continuous without an opening, the at least one slot comprising a first slot that is generally U-shaped and/or is contiguous along at least three peripheral sides of the plurality of peripheral sides.

2. The slot antenna of Claim 1, wherein the first slot extends along a first peripheral side, a second peripheral side, and a third peripheral side of the plurality of peripheral sides of the metallic frame.

3. The slot antenna of Claim 2, further comprising
a first matching circuit configured to tune at least one first range of frequencies of the slot antenna, the first matching circuit disposed at a first distance from a first distal end of the first slot along the first peripheral side.

4. The slot antenna of Claim 3, further comprising:
a second matching circuit configured to tune at least one second range of frequencies of the slot antenna different from the at least one first range of frequencies, the second matching circuit disposed at a second distance from a second distal end of the first slot along the third peripheral side.

5. The slot antenna of claims 3 or 4, further comprising:
a feeding port disposed along the second peripheral side of the metallic frame,
wherein a first length from the first distal end to the feeding port is approximately one half of a first wavelength corresponding to a first frequency in the at least one first range of frequencies of the slot antenna, and
wherein a second length from the second distal end to the feeding port is approximately one half of a second wavelength corresponding to a second frequency in the at least one second range of frequencies of the slot antenna.

6. The slot antenna of one of claims 2 to 4, further comprising:
a feeding port and a shorting port disposed along the second peripheral side of a metallic frame.

7. The slot antenna of one of the preceding claims, wherein a length of the first slot is proportional to a wavelength corresponding to a frequency of the slot antenna.

8. The slot antenna of one of the preceding claims, wherein the at least one slot further comprises one or more second slots, each of the one or more second slots separate from the first slot or a neighboring slot of the one or more second slots by at least a threshold distance.

9. A slot antenna, comprising:
a metallic frame, the metallic frame comprising a primary sheet with a plurality of peripheral sides surrounding the primary sheet, the metallic frame further comprising at least one slot on the primary sheet with each slot of the at least one slot extending along one or more peripheral sides of the plurality of peripheral sides of the metallic frame such that the plurality of peripheral sides are continuous without an opening;
one or more matching circuits each electrically connected across a respective slot of the at least one slot and configured to tune at least one respective frequency range of one or more frequency ranges of the slot antenna.

10. The slot antenna of Claim 9, wherein each of the one or more matching circuits is disposed at a respective distance from a respective distal end of the respective slot.

11. The slot antenna of Claim 10, wherein the respective distance of each of the one or more matching circuits is determined according to a wavelength corresponding to a frequency in the respective frequency of the one or more frequency ranges of the slot antenna tuned by the one or more matching circuits.

12. The slot antenna of Claim 11, wherein the at least one slot comprises a first slot extending contiguously along at least three peripheral sides of the plurality of peripheral sides, and/or
wherein the first slot is generally U-shaped.

13. The slot antenna of Claim 12, wherein each of the one or more matching circuits is electrically connected across the first slot and disposed at a respective distance from one of two distal ends of the first slot.

14. An apparatus, comprising:
a slot antenna according to one of the preceding claims;
a wireless communication circuit configured to transmit, receive, or both transmit and receive wireless signals through the slot antenna; and
a printed circuit board (PCB) disposed on the metallic frame of the slot antenna and configured to carry the wireless communication circuit.
